# EUROPÄISCHE PATENTSCHRIFT

(11) **EP 2 912 394 B1**
(45) Veröffentlichungstag und Bekanntmachung des Hinweises auf die Patenterteilung: **31.01.2018**
(21) Anmeldenummer: 13776731.5
(22) Anmeldetag: 15.10.2013
(51) Int. Cl.: F28D 7/00, F28D 7/02, F28F 27/02, F25J 5/00

(54) **GEWICKELTER WÄRMEÜBERTRAGER MIT EINER MEHRZAHL VON EINLÄSSEN UND VERFAHREN ZUR ANPASSUNG EINER HEIZFLÄCHE DES WÄRMEÜBERTRAGERS**
HEAT EXCHANGER WITH A PLURALITY OF INLETS AND METHOD OF ADAPTING THE HEATING SURFACE OF THE HEAT EXCHANGER
ÉCHANGEUR DE CHALEUR AVEC PLUSIEURES ENTRÉES ET PROCÉDÉ D'ADAPTION DE LA SURFACE CHAUFFANTE DE L'ÉCHANGEUR THERMIQUE

(30) Priorität: 18.10.2012 EP 12007211
(43) Veröffentlichungstag der Anmeldung: 02.09.2015
(73) Patentinhaber: Linde Aktiengesellschaft, 80331 München (DE)
(72) Erfinder: STEINBAUER, Manfred, 82399 Raisting (DE); KERBER, Christiane, 82343 Pöcking (DE); HAMMERDINGER, Markus, 83342 Tacherting (DE); SPREEMANN, Jürgen, 83022 Rosenheim (DE)
(86) Internationale Anmeldenummer: PCT/EP2013/003099
(87) Internationale Veröffentlichungsnummer: WO 2014/060093

(56) Entgegenhaltungen:
- EP-A2- 2 511 642
- US-A- 2 716 333
- US-A- 3 609 943
- US-A1- 2004 202 585

## Beschreibung

Die Erfindung betrifft einen Wärmeübertrager, insbesondere zur Verflüssigung von Erdgas, oder z.B. zur Verwendung in Rectisolanlagen oder Petrochemieanlagen sowie ein Verfahren zum Anpassen einer Heizfläche des Wärmeübertragers an unterschiedliche Betriebsfälle.

Ein solcher Wärmeübertrager kann rohrseitig einen oder mehrere Ströme führen. Diese rohrseitigen Ströme werden über Einlässe des Wärmeübertragers in den Wärmeübertrager eingeleitet und jeweils auf ein oder mehrere Rohre verteilt. Die Einlässe sind somit eindeutig jeweils einem Strom zugeordnet. Ein derartiger Wärmetauscher ist in EP 2 511 642 A2 beschrieben.

Soll ein Wärmeübertrager für stark unterschiedliche prozessseitige Belastungen eingesetzt werden, bedeutet dies, den Wärmeübertrager für zwei oder mehr Betriebsfälle auszulegen. In den meisten Betriebsfällen sind dann die für einen Fall passenden Heizflächen für die Ströme für den nächsten Fall zu klein oder zu groß. Es muss also die individuelle Heizfläche eines Stromes für den einen Fall angepasst werden und für die anderen Ströme für andere Fälle. Dies führt zu einer erheblichen Vergrößerung der Wärmeübertragungsfläche und damit auch zu deutlich höheren Kosten für den Wärmeübertrager.

Hiervon ausgehend liegt daher der vorliegenden Erfindung die Aufgabe zugrunde, einen Wärmeübertrager der eingangs genannten Art dahingehend zu verbessern, dass eine vergleichsweise kostengünstige Anpassung an unterschiedliche Betriebsfälle möglich ist. Weiterhin liegt der Erfindung die Aufgabe zugrunde, ein entsprechendes Verfahren anzugeben.

Dieses Problem wird einerseits durch einen gewickelten Wärmeübertrager mit den Merkmalen des Anspruchs 1 gelöst. Vorteilhafte Ausgestaltungen der Erfindung sind in den Unteransprüchen angegeben.

Gemäß Anspruch 1 weist ein erfindungsgemäßer gewickelter Wärmeübertrager eine Mehrzahl an Einlässen auf, die jeweils mit zumindest einem zugeordneten Rohr des Wärmeübertragers verbunden sind, so dass zumindest ein Strom eines ersten Mediums sowie ein Strom eines zweiten Mediums über zumindest einen zugeordneten Einlass in das jeweils zugeordnete, mindestens eine Rohr einleitbar sind, wobei der Wärmeübertrager einen Mantel aufweist, der einen Mantelraum umgibt, in dem die besagten Rohre angeordnet sind, so dass insbesondere ein im Mantelraum geführter Strom eines Mediums in einen indirekten Wärmetausch mit einem in dem jeweiligen Rohr geführten Strom eines Mediums tritt, und wobei die besagten Rohre jeweils um ein Kernrohr des Wärmeübertragers gewickelt sind.

Erfindungsgemäß ist nun vorgesehen, dass der Wärmeübertrager zur Anpassung der Heizfläche an unterschiedliche Betriebsfälle zumindest ein Umschaltmittel aufweist, das dazu ausgebildet ist, zumindest einen der Einlässe zwischen zumindest einem ersten Betriebszustand und einem zweiten Betriebszustand hin- und her zu schalten bzw. umzuschalten, so dass im ersten Betriebszustand der Strom bzw. ein Teilstrom des ersten Mediums und im zweiten Betriebszustand der Strom bzw. ein Teilstrom des zweites Mediums über den mindestens einen Einlass in das mindestens eine zugeordnete Rohr des Wärmeübertragers einleitbar ist, um im ersten Betriebszustand dem Strom des ersten Mediums mehr Heizfläche zur Verfügung zu stellen (nämlich die des mindestens einen zugeordneten Rohres) und dem Strom des zweiten Mediums entsprechend weniger Heizfläche, und um im zweiten Betriebszustand dem Strom des zweiten Mediums mehr Heizfläche zur Verfügung zu stellen und dem Strom des ersten Mediums entsprechend weniger Heizfläche.

Die Erfindung ermöglicht also mit Vorteil die Umschaltbarkeit von Einlässen (bzw. entsprechenden Stutzen) und damit der jeweils zugeordneten Rohre und Heizflächen auf die verschiedenen, rohrseitigen Ströme. So kann z.B. mittels des Umschaltens die Wärmeübertragungsfläche (auch Heizfläche genannt) oder ein Teil der Wärmeübertragungsfläche eines Mediums einem anderen Medium zur Verfügung gestellt werden. Durch das Umschalten wird also insbesondere die Wärmeübertragungsfläche bzw. Heizfläche verändert, indem den einzelnen Medien jeweils eine unterschiedliche Anzahl an Rohren zugewiesen wird.

So ist z.B. eine Ausführungsform vorgesehen, in der dem Strom des ersten Mediums in einem ersten Betriebsfall drei Einlässe zur Verfügung stehen und dem weiteren Strom des zweiten Mediums nur einer. Für einen zweiten Betriebsfall soll aber die Heizfläche für den Strom des zweiten Mediums größer sein und die für den Strom des ersten Mediums kann kleiner sein. Entsprechend wird dann z.B. einer der drei Einlässe für den Strom des ersten Mediums auf den Strom des zweiten Mediums umgeschaltet und die daran gekoppelte Heizfläche dem weiteren Strom des zweiten Mediums zur Verfügung gestellt. Somit können unterschiedlichste Belastungen der Ströme für verschiedene Fälle mit einer deutlich kleineren Heizfläche abgedeckt werden.

Die Erfindung lässt sich natürlich auf eine beliebige Anzahl von mehreren Einlässen bzw. Strömen anwenden. Insbesondere können auch mehrere Einlässe in der vorstehend ausgeführten Weise umschaltbar sein bzw. es können mehrere Umschaltmittel vorgesehen sein. Des Weiteren können ein oder mehrere Einlässe mittels einer entsprechenden Zahl an Umschaltmitteln auch zwischen mehr als zwei Betriebszuständen bzw. Strömen hin- und her geschaltet werden. So kann z.B. das mindestens eine Umschaltmittel dazu ausgebildet sein, zumindest einen der Einlässe zwischen zumindest einem ersten Betriebszustand und einem zweiten Betriebszustand hin- und her zu schalten, so dass im ersten Betriebszustand der Strom bzw. ein Teilstrom des erstes Mediums und im zweiten Betriebszustand der Strom bzw. ein Teilstrom des zweiten Mediums über den mindestens einen Einlass in das mindestens eine zugeordnete Rohr einleitbar ist, so dass im zweiten Betriebszustand ein Rohr, mehrere Rohre oder alle Rohre des Stromes des ersten Mediums dem Strom des zweiten Mediums zugeordnet sind, so dass diesem entsprechend mehr Heizfläche zur Verfügung steht und dem Strom des ersten Mediums entsprechend weniger Heizfläche.

In einer weiteren Ausführungsform der Erfindung ist vorgesehen, dass das Umschaltmittel zum Umschalten des mindestens einen Einlasses ein erstes Ventil zum Absperren einer mit jenem Einlass verbundenen ersten Rohrleitung sowie ein zweites Ventil zum Absperren einer mit jenem Einlass verbundenen zweiten Rohrleitung aufweist, wobei der Wärmeübertrager dazu ausgebildet ist, den Strom des ersten Mediums über die erste Rohrleitung und den Strom des zweiten Mediums über die zweite Rohrleitung jenem Einlass zuzuführen. Ist zum Beispiel das zweite Ventil geschlossen und das erste Ventil offen, wird lediglich der Strom des ersten Mediums über den besagten Einlass auf die zugeordneten Rohre des Wärmeübertragers aufgegeben. Für den Fall, dass das erste Ventil geschlossen und das zweite Ventil offen ist, wird lediglich der Strom des zweiten Mediums über den besagten Einlass auf die zugeordneten Rohre des Wärmeübertragers aufgegeben.

Ein dem jeweiligen umschaltbaren Einlass zugeordneter Auslass, der mit dem Einlass über eines oder mehrere Rohre des Wärmeübertragers verbunden ist, weist ebenfalls ein weiteres Umschaltmittel auf, so dass der Auslass entsprechend dem zugeordneten Einlass umgeschaltet werden kann. Hierzu kann das weitere Umschaltmittel ebenfalls zwei Ventile aufweisen, so dass der jeweils aus dem Auslass abgezogene Strom einer zugeordneten Auslass-Rohrleitung zugeführt werden kann.

Andere Vorrichtungen, mittels derer jeweils einer von mehreren Strömen auf einen Einlass bzw. einen dem Einlass zugeordnetem Auslass gelegt werden kann, sind auch denkbar.

Bevorzugt sind die besagten Einlässe und/oder die jeweils zugeordneten Auslässe jeweils als Stutzen des Wärmeübertragers ausgebildet. Derartige Stutzen stehen vorzugsweise von einem drucktragenden Mantel des Wärmeübertragers ab, können jedoch auch innenliegend ausgeführt bzw. im Mantelraum angeordnet sein. Der Mantel umgibt des Weiteren einen Mantelraum des Wärmeübertragers, in dem die besagten Rohre des Wärmeübertragers angeordnet sind, so dass insbesondere ein im Mantelraum geführtes Medium in einen indirekten Wärmetausch mit einem in dem jeweiligen Rohr geführten Medium treten kann.

Bevorzugt ist der jeweilige Einlass des Wärmeübertragers mit einer Mehrzahl an zugeordneten Rohren verbunden, wobei jene Rohre in einem dem jeweiligen Einlass bzw. Stutzen zugeordneten Rohrboden verankert sind.

Besonders bevorzugt ist der erfindungsgemäße Wärmeübertrager, wie bereits erwähnt, als ein gewickelter Wärmeübertrager ausgebildet, bei dem die besagten Rohre jeweils insbesondere helixförmig um das Kernrohr des Wärmeübertragers gewickelt sind, das im Mantelraum angeordnet ist und sich insbesondere entlang einer Längsachse des Mantels bzw. Wärmeübertragers erstreckt, die - bezogen auf einen bestimmungsgemäß angeordneten Wärmeübertrager - mit der Vertikalen zusammenfällt. Der Wärmeübertrager könnte jedoch theoretisch auch liegend installiert werden. Es ist auch möglich, die Erfindung auf andere Wärmeübertrager, wie z.B. Geradrohrwärmeübertrager, Plattenwärmeübertrager oder sonstige Wärmeübertrager anzuwenden.

Der erfindungsgemäße Wärmeübertrager wird bevorzugt zur Verflüssigung von Erdgas verwendet, wobei insbesondere das Umschaltmittel dazu ausgebildet ist, einen der Einlässe bzw. Stutzen von einem Erdgasstrom auf einen Kühlmittelstrom oder umgekehrt umzuschalten. Der erfindungsgemäße Wärmeübertrager ist natürlich nicht auf die Verwendung zur Verflüssigung von Erdgas beschränkt, sondern kann z.B. auch bei Rectisolanlagen oder Anlagen der Petrochemie eingesetzt werden.

Weiterhin wird das der Erfindung zugrunde liegende Problem durch ein Verfahren mit den Merkmalen des Anspruchs 10 gelöst.

Danach ist vorgesehen, dass der Wärmeübertrager eine Mehrzahl an Einlässen aufweist, die jeweils mit zumindest einem zugeordneten Rohr des Wärmeübertragers verbunden sind, wobei jedes der dem jeweiligen Einlass zugeordneten Rohre eine Heizfläche definiert, wobei zumindest einer der Einlässe aus einem ersten Betriebszustand in einen zweiten Betriebszustand geschaltet wird, so dass im ersten Betriebszustand der Strom bzw. ein Teilstrom des erstes Mediums und im zweiten Betriebszustand der Strom bzw. ein Teilstrom des zweiten Mediums über den mindestens einen Einlass in das mindestens eine zugeordnete Rohr eingeleitet wird, um im zweiten Betriebszustand dem Strom des zweiten Mediums mehr Heizfläche zur Verfügung zu stellen und dem Strom des ersten Mediums entsprechend weniger Heizfläche.

Vorzugsweise wird bei dem erfindungsgemäßen Verfahren der erfindungsgemäße Wärmeübertrager verwendet.

Bevorzugt ist weiterhin vorgesehen, dass im zweiten Betriebszustand ein Rohr, mehrere Rohre oder alle Rohre des Stromes des ersten Mediums dem Strom des zweiten Mediums zugeordnet sind, so dass diesem entsprechend mehr Heizfläche zur Verfügung steht und dem Strom des ersten Mediums entsprechend weniger Heizfläche (siehe auch oben).

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine schematische Schnittansicht eines erfindungsgemäßen Wärmeübertragers entlang einer quer zur Vertikalen bzw. Längsachse des Wärmeübertragers verlaufenden Querschnittsebene; und
- Fig. 2: eine schematische, teilweise geschnittene Ansicht eines umschaltbaren Einlasses und eines zugeordneten umschaltbaren Auslasses sowie eines den Einlass mit dem Auslass verbindenden helixförmigen Rohres eines Wärmeübertragers nach Art der Figur 1.

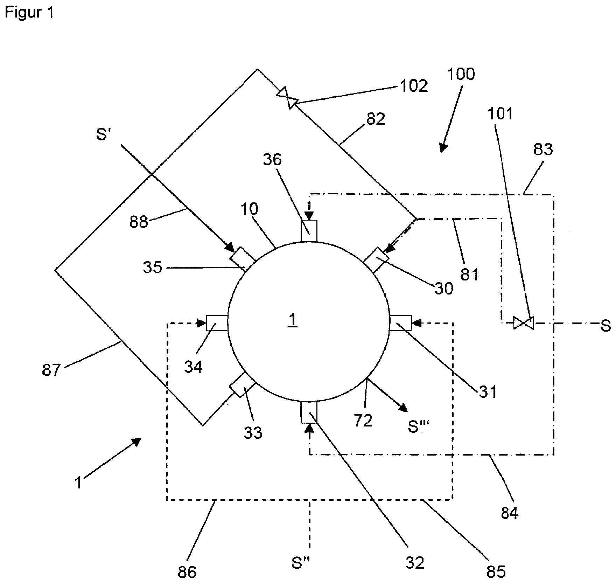

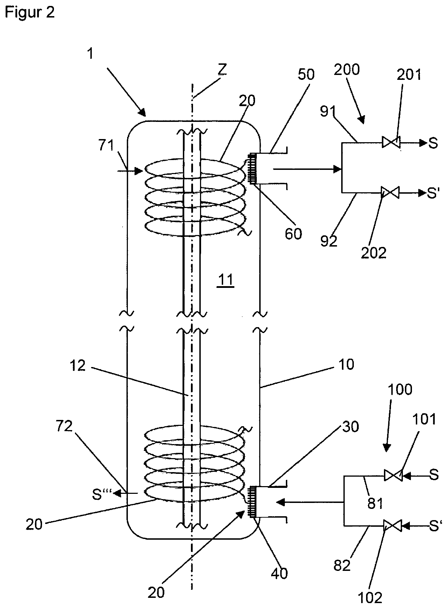

Figur 1 zeigt im Zusammenhang mit Figur 2 einen erfindungsgemäßen Wärmeübertrager 1 in Form eines gewickelten Wärmeübertragers 1. Der Wärmeübertrager 1 weist einen drucktragenden Mantel 10 auf, dessen Längsachse Z sich entlang der Vertikalen Z erstreckt. Alternativ hierzu kann die Längsachse Z bei einer liegenden Anordnung des Wärmeübertragers 1 auch entlang der Horizontalen verlaufen. Der Mantel 10 definiert einen Mantelraum 11, in dem ein Kernrohr 12 angeordnet ist, das sich entlang der Längsachse Z erstreckt, wobei eine Mehrzahl an Rohren 20 in mehreren Lagen helixförmig um das Kernrohr 12 gewickelt sind. In der Figur 2 ist der Einfachheit halber lediglich ein derartiges Rohr 20 dargestellt. Jeweils mehrere Rohre 20 sind in einem zugeordneten Rohrboden 40 verankert und können über einen zugeordneten Einlass 30-36 in Form eines Stutzens mit einem rohrseitigen Strom S, S', S" beschickt werden. In der Figur 2 ist aus Gründen der Übersichtlichkeit lediglich ein derartiger Stutzen 30 eingezeichnet. Die Rohre 20 erstrecken sich ausgehend vom jeweiligen am unteren Ende des Mantels 10 des Wärmeübertragers 1 vorgesehenen Einlass bzw. Stutzen 30-36 in der vorgenannten Art zu einem zugeordneten Auslass 50 in Form eines Stutzens, von denen einer in der Figur 2 exemplarisch dargestellt ist. Auch hier werden die einzelnen Rohre 20 bevorzugt in einem Rohrboden 60 zusammengefasst. Die besagten Einlässe 30-36 können auch an einem oberen Bereich des Wärmeübertragers 1 angeordnet sein und die zugeordneten Auslässe 50 an einem unteren Ende; die rohrseitige Strömung verläuft dann von oben nach unten und die mantelseitige von unten nach oben.

In dem Mantelraum 11 wird ferner ein mantelseitiger Strom S"' im Gegenstrom zu den rohrseitigen Strömen S, S', S" geführt, der über einen Einlass 71 in den Mantelraum 11 gegeben wird und über einen Auslass 72 aus dem Mantelraum 72 abgezogen wird. Die einzelnen rohrseitigen Ströme S, S', S" treten dabei untereinander sowie mit dem mantelseitigen Strom S"' in einen indirekten Wärmetausch.

Gemäß Figur 1 weist der Wärmeübertrager 1 im Einzelnen drei Stutzen 30, 32, 36 auf, die mit Rohrleitungen 81, 82, 83 und 84 verbunden sind, wobei über die Rohrleitungen 81, 83 und 84 ein Strom S eines ersten Mediums in je eine Mehrzahl an mit den Stutzen 30, 32, 36 verbundenen Rohren 20 des Wärmeübertragers 1 gegeben wird. Des Weiteren weist der Wärmeübertrager 1 zwei Stutzen 35, 33 auf, die mit Rohrleitungen 87, 88 verbunden sind, über die ein Strom S' eines zweiten Mediums in je eine Mehrzahl an mit den Stutzen 33, 35 verbundenen Rohren 20 gegeben wird, sowie ferner zwei Stutzen 31, 34, die mit Rohrleitungen 85, 86 verbunden sind, über die ein Strom S" eines dritten Mediums in je eine Mehrzahl an mit den Stutzen 31, 34 verbundenen Rohren 20 des Wärmeübertragers 1 eingespeist wird.

Um nun die einzelnen, durch die Rohre 20 definierten Heizflächen des Wärmeübertragers 1 an unterschiedliche Betriebsfälle anpassen zu können, ist zumindest einer der Einlässe bzw. Stutzen 30 erfindungsgemäß umschaltbar ausgestaltet, d.h., dass vorliegend über den besagten Stutzen 30 in einem ersten Betriebszustand entweder der Strom S des ersten Mediums oder in einem zweiten Betriebszustand der Strom S' des zweiten Mediums in den Stutzen 30 eingespeist werden kann. Auf diese Weise kann die zur Verfügung stehende Heizfläche auf die vorhandenen, rohrseitigen Ströme S, S' aufgeteilt werden. Bei der Erdgasverflüssigung kann somit je nach Betriebsfall z.B. dem zu verflüssigendem Erdgasstrom S oder dem schweren Kühlmittelgemischstrom S' mehr Heizfläche (und dem jeweils anderen Strom entsprechend weniger Heizfläche) zugeordnet werden.

Die Umschaltung des Stutzens 30 kann z.B. realisiert werden, indem die den Strom S des ersten Mediums führende und mit dem Stutzen 30 verbundene erste Rohrleitung 81 ein erstes Ventil 101 aufweist, und indem die den Strom S' des zweiten Mediums führende und mit dem Stutzen 30 verbundene zweite Rohrleitung 82 ein zweites Ventil 102 aufweist. Entsprechend der Stellung der Ventile 101, 102 kann dann entweder der eine oder der andere Strom S, S' in den Stutzen 30 eingespeist werden.

Für den dem Stutzen 30 zugeordneten Auslass 50 ist ein weiteres Umschaltmittel 200 vorgesehen (vgl. Figur 2), so dass der jeweils aus dem zugeordneten Auslass 50 abgezogenen Strom S, S' in eine zugeordnete Auslass-Rohrleitung 91, 92 eingespeist werden kann. Das weitere Umschaltmittel 200 kann zur korrekten Verteilung der Ströme S, S' auf die Auslass-Rohrleitungen 91, 92 ein erstes Ventil 201 an der ersten Auslass-Rohrleitung 91 und ein zweites Ventil 202 an der zweiten Auslass-Rohrleitung 92 aufweisen.

Das vorstehend beschriebene erfindungsgemäße Prinzip lässt sich natürlich auf alle vorhandenen rohrseitigen Ströme bzw. Einlässe und jeweils zugeordnete Auslässe anwenden.

Mittels der Erfindung können also verschiedenste Belastungsfälle für unterschiedliche Rohrfraktionen ohne Vergrößerung der Heizfläche abgedeckt werden. Die Kosten für den Wärmeübertrager werden dadurch gesenkt und dessen Flexibilität erheblich erhöht.

**Bezugszeichenliste**

| | |
|---|---|
| 1 | Gewickelter Wärmeübertrager |
| 10 | Mantel |
| 11 | Mantelraum |
| 12 | Kernrohr |
| 20 | Rohr |
| 30-36 | Einlässe bzw. Stutzen |
| 40, 60 | Rohrboden |
| 50 | Auslass bzw. Stutzen |
| 71 | Einlass Mantelraum |
| 72 | Auslass Mantelraum |
| 80-88 | Rohrleitungen |
| 100 | Umschaltmittel |
| 101, 102, 201, 202 | Ventile |
| 200 | Weiteres Umschaltmittel |
| S | Strom erstes Medium |
| S' | Strom zweites Medium |
| S" | Strom drittes Medium |
| S'" | Mantelseitiger Strom |
| Z | Längsachse, Vertikale |

## Patentansprüche

1. Gewickelter Wärmeübertrager, mit:
einer Mehrzahl an Einlässen (30-36), die jeweils mit zumindest einem zugeordneten Rohr (20) des Wärmeübertragers (1) verbunden sind, so dass zumindest ein Strom (S) eines ersten Mediums sowie ein Strom (S') eines zweiten Mediums über jeweils zumindest einen zugeordneten Einlass (30, 32, 36, 33, 35) in das jeweils zugeordnete mindestens eine Rohr (20) einleitbar sind, wobei der Wärmeübertrager (1) einen Mantel (10) aufweist, der einen Mantelraum (11) umgibt, in dem die besagten Rohre (20) angeordnet sind, so dass insbesondere ein im Mantelraum (11) geführter Strom (S"') eines Mediums in einen indirekten Wärmetausch mit einem in dem jeweiligen Rohr (20) geführten Strom (S, S') eines Mediums tritt, und wobei die besagten Rohre (20) jeweils um ein Kernrohr (12) des Wärmeübertragers (1) gewickelt sind, wobei jedes der dem jeweiligen Einlass (30-36) zugeordneten Rohre (20) eine Heizfläche definiert,
**dadurch gekennzeichnet,**
**dass** der Wärmeübertrager (1) zumindest ein Umschaltmittel (100) aufweist, das dazu ausgebildet ist, zumindest einen der Einlässe (30) zwischen zumindest einem ersten Betriebszustand und einem zweiten Betriebszustand hin- und her zu schalten, so dass im ersten Betriebszustand der Strom (S) des erstes Mediums und im zweiten Betriebszustand der Strom (S') des zweiten Mediums über den mindestens einen Einlass (30) in das mindestens eine zugeordnete Rohr (20) einleitbar ist, um im ersten Betriebszustand dem Strom (S) des ersten Mediums mehr Heizfläche zur Verfügung zu stellen und dem Strom (S') des zweiten Mediums entsprechend weniger Heizfläche, und um im zweiten Betriebszustand dem Strom (S') des zweiten Mediums mehr Heizfläche zur Verfügung zu stellen und dem Strom (S) des ersten Mediums entsprechend weniger Heizfläche.

2. Wärmeübertrager nach Anspruch 1, **dadurch gekennzeichnet, dass** das Umschaltmittel (100) zum Umschalten des mindestens einen Einlasses (30) ein erstes Ventil (101) zum Absperren einer mit jenem Einlass (30) verbundenen ersten Rohrleitung (81) sowie ein zweites Ventil (102) zum Absperren einer mit jenem Einlass (30) verbundenen zweiten Rohrleitung (82) aufweist, wobei der Wärmeübertrager (1) dazu ausgebildet ist, den Strom (S) des ersten Mediums über die erste Rohrleitung (81) und den Strom (S') des zweiten Mediums über die zweite Rohrleitung (82) jenem Einlass (30) zuzuführen.

3. Wärmeübertrager nach Anspruch 1 oder 2, **dadurch gekennzeichnet, dass** dem mindestens einen Einlass (30) ein Auslass (50) zugeordnet ist, über den der Strom (S) des ersten Mediums oder der Strom (S') des zweiten Mediums aus dem mindestens einen, dem Einlass (30) zugeordneten Rohr (20) abziehbar ist, wobei ein weiteres Umschaltmittel (200) vorgesehen ist, das dazu ausgebildet ist, den Auslass (50) zwischen zumindest einem ersten Betriebszustand und einem zweiten Betriebszustand hin- und her zu schalten, so dass im ersten Betriebszustand der Strom (S) des erstes Mediums einer mit dem Auslass (50) verbundenen ersten Auslass-Rohrleitung (91) zuführbar ist, und so dass im zweiten Betriebszustand der Strom (S') des zweiten Mediums einer mit dem Auslass (50) verbundenen zweiten Auslass-Rohrleitung (92) zuführbar ist, wobei insbesondere das weitere Umschaltmittel (200) ein an der ersten Auslass-Rohrleitung (91) vorgesehenes erstes Ventil (201) zum Absperren der ersten Auslass-Rohrleitung (91) und ein an der zweiten Auslass-Rohrleitung (92) vorgesehenes zweites Ventil (202) zum Absperren der zweiten Auslass-Rohrleitung (92) aufweist.

4. Wärmeübertrager nach einem der vorhergehenden Ansprüche, **dadurch gekennzeichnet, dass** die Einlässe (30-36) des Wärmeübertragers (1) als Stutzen des Wärmeübertragers (1) ausgebildet sind, wobei insbesondere die Einlässe (30-36) an einem oberen oder an einem unteren Ende des Wärmeübertragers (1) angeordnet sind.

5. Wärmeübertrager nach Anspruch 3 oder nach Anspruch 4 soweit rückbezogen auf Anspruch 3, **dadurch gekennzeichnet, dass** der Auslass (50) des Wärmeübertragers (1) als Stutzen des Wärmeübertragers (1) ausgebildet ist, wobei insbesondere jener Auslass (50) an einem dem zugeordneten Einlass (30) gegenüberliegenden Ende des Wärmeübertragers (1) angeordnet ist.

6. Wärmeübertrager nach Anspruch 4 oder 5, **dadurch gekennzeichnet, dass** die Stutzen (30-36, 50) vom Mantel (10) abragen oder innenliegend ausgebildet sind.

7. Wärmeübertrager nach einem der vorhergehenden Ansprüche, **dadurch gekennzeichnet, dass** mit den Einlässen (30-36) oder dem mindestens einen Einlass (30) jeweils eine Mehrzahl an Rohren (20) verbunden ist, wobei jene Rohre (20) insbesondere in einem dem jeweiligen Einlass (30-36) zugeordneten Rohrboden (40) verankert sind.

8. Wärmeübertrager nach den Ansprüchen 3 und 7, **dadurch gekennzeichnet, dass** der dem mindestens einen Einlass (30) zugeordnete Auslass (50) mit jener Mehrzahl an Rohren (20) verbunden ist, wobei jene Rohre (20) insbesondere in einem dem Auslass (50) zugeordneten Rohrboden (60) verankert sind.

9. Wärmeübertrager nach einem der vorhergehenden Ansprüche, **dadurch gekennzeichnet, dass** im zweiten Betriebszustand ein Rohr, mehrere Rohre oder alle Rohre des Stromes (S) des ersten Mediums dem Strom (S') des zweiten Mediums zugeordnet sind, so dass diesem entsprechend mehr Heizfläche zur Verfügung steht und dem Strom (S) des ersten Mediums entsprechend weniger Heizfläche.

10. Verfahren zum Anpassen der Heizfläche eines gewickelten Wärmeübertragers (1) an unterschiedliche Betriebsfälle, insbesondere unter Verwendung eines Wärmeübertragers (1) nach einem der vorhergehenden Ansprüche, wobei der Wärmeübertrager (1) eine Mehrzahl an Einlässen (30-36) aufweist, die jeweils mit zumindest einem zugeordneten Rohr (20) des Wärmeübertragers (1) verbunden sind, wobei jedes der dem jeweiligen Einlass (30-36) zugeordneten Rohre (20) eine Heizfläche definiert, wobei zumindest einer der Einlässe (30) aus einem ersten Betriebszustand in einen zweiten Betriebszustand geschaltet wird, so dass im ersten Betriebszustand der Strom (S) des erstes Mediums und im zweiten Betriebszustand der Strom (S') des zweiten Mediums über den mindestens einen Einlass (30) in das mindestens eine zugeordnete Rohr (20) eingeleitet wird, um im zweiten Betriebszustand dem Strom (S') des zweiten Mediums mehr Heizfläche zur Verfügung zu stellen und dem Strom (S) des ersten Mediums entsprechend weniger Heizfläche.

11. Verfahren nach Anspruch 10, **dadurch gekennzeichnet, dass** im zweiten Betriebszustand ein Rohr, mehrere Rohre oder alle Rohre des Stromes (S) des ersten Mediums dem Strom (S') des zweiten Mediums zugeordnet sind, so dass diesem entsprechend mehr Heizfläche zur Verfügung steht und dem Strom (S) des ersten Mediums entsprechend weniger Heizfläche.

## Claims

1. Helically coiled heat exchanger, with:
a plurality of inlets (30-36) which are connected in each case to at least one assigned tube (20) of the heat exchanger (1), so that at least one stream (S) of a first medium and one stream (S') of a second medium can be introduced in each case via at least one assigned inlet (30, 32, 36, 33, 35) in each case into the assigned at least one tube (20), the heat exchanger (1) having a jacket (10) surrounding a jacket space (11) in which the said tubes (20) are arranged, so that in particular, a stream (S"') of a medium routed in the jacket space (11) comes into indirect heat exchange with a stream (S, S') of a medium routed in the respective tube (20), and the said tubes (20) in this case being coiled helically around a core tube (12) of the heat exchanger (1), each of the tubes (20) assigned to the respective inlet (30-36) defining a heating surface,
**characterized**
**in that** the heat exchanger (1) has at least one changeover means (100) which is designed to switch at least one of the inlets (30) to and fro between at least one first operating state and one second operating state, so that, in the first operating state, the stream (S) of the first medium and, in the second operating state, the stream (S') of the second medium can be introduced via the at least one inlet (30) into the at least one assigned tube (20), in order, in the first operating state, to make more heating surface available to the stream (S) of the first medium and make correspondingly less heating surface available to the stream (S') of the second medium, and in order, in the second operating state, to make more heating surface available to the stream (S') of the second medium and make correspondingly less heating surface available to the stream (S) of the first medium.

2. Heat exchanger according to Claim 1, **characterized in that**, to change over the at least one inlet (30), the changeover means (100) has a first valve (101) for shutting off a first pipeline (81) connected to that inlet (30) and a second valve (102) for shutting off a second pipeline (82) connected to that inlet (30), the heat exchanger (1) being designed to feed the stream (S) of the first medium via the first pipeline (81) and the stream (S') of the second medium via the second pipeline (82) to that inlet (30).

3. Heat exchanger according to Claim 1 or 2, **characterized in that** the at least one inlet (30) is assigned an outlet (50), via which the stream (S) of the first medium or the stream (S') of the second medium can be drawn off from the at least one tube (20) assigned to the inlet (30), further changeover means (200) being provided, which is designed to switch the outlet (50) to and fro between at least one first operating state and one second operating state, so that, in the first operating state, the stream (S) of the first medium can be fed to a first outlet pipeline (91) connected to the outlet (50), and so that, in the second operating state, the stream (S') of the second medium can be fed to a second outlet pipeline (92) connected to the outlet (50), in particular the further changeover means (200) having a first valve (201), provided on the first outlet pipeline (91), for shutting off the first outlet pipeline (91) and a second valve (202), provided on the second outlet pipeline (92), for shutting off the second outlet pipeline (92).

4. Heat exchanger according to one of the preceding claims, **characterized in that** the inlets (30-36) of the heat exchanger (1) are designed as connection pieces of the heat exchanger (1), in particular the inlets (30-36) being arranged at an upper or at a lower end of the heat exchanger (1).

5. Heat exchanger according to Claim 3 or according to Claim 4 in so far as it refers back to Claim 3, **characterized in that** the outlet (50) of the heat exchanger (1) is designed as a connection piece of the heat exchanger (1), in particular that outlet (50) being arranged at an end of the heat exchanger (1) which lies opposite the assigned inlet (30) .

6. Heat exchanger according to Claim 4 or 5, **characterized in that** the connection pieces (30-36, 50) project from the jacket (10) or are formed internally.

7. Heat exchanger according to one of the preceding claims, **characterized in that** in each case a plurality of tubes (20) is connected to the inlets (30-36) or to the at least one inlet (30), those tubes (20) being anchored, in particular, in a tube bottom (40) assigned to the respective inlet (30-36) .

8. Heat exchanger according to Claims 3 and 7, **characterized in that** the outlet (50) assigned to the at least one inlet (30) is connected to that plurality of tubes (20), those tubes (20) being anchored, in particular, in a tube bottom (60) assigned to the outlet (50).

9. Heat exchanger according to one of the preceding claims, **characterized in that**, in the second operating state, one tube, a plurality of tubes or all tubes of the stream (S) of the first medium is or are assigned to the stream (S') of the second medium, so that correspondingly more heating surface is available to this and correspondingly less heating surface is available to the stream (S) of the first medium.

10. Method for adapting the heating surface of a helically coiled heat exchanger (1) to different operating situations, in particular using a heat exchanger (1) according to one of the preceding claims, the heat exchanger (1) having a plurality of inlets (30-36) which are connected in each case to at least one assigned tube (20) of the heat exchanger (1), each of the tubes (20) assigned to the respective inlet (30-36) defining a heating surface, at least one of the inlets (30) being switched from a first operating state into a second operating state, so that, in the first operating state, the stream (S) of the first medium and, in the second operating state, the stream (S') of the second medium are introduced via the at least one inlet (30) into the at least one assigned tube (20), in order, in the second operating state, to make more heating surface available to the stream (S') of the second medium and to make correspondingly less heating surface available to the stream (S) of the first medium.

11. Method according to Claim 10, **characterized in that**, in the second operating state, one tube, a plurality of tubes or all tubes of the stream (S) of the first medium is or are assigned to the stream (S') of the second medium, so that correspondingly more heating surface is available to this and correspondingly less heating surface is available to the stream (S) of the first medium.

## Revendications

1. Echangeur de chaleur en spirale, présentant :
plusieurs entrées (30-36), chacune reliée à au moins un tube associé (20) de l'échangeur de chaleur (1) de telle sorte qu'au moins un écoulement (S) d'un premier fluide ainsi qu'un écoulement (S') d'un deuxième fluide puissent être introduits dans le ou les tubes (20) qui y sont associés, chaque fois par au moins une entrée associée (30, 32, 36, 33, 35),
l'échangeur de chaleur (1) présentant une enveloppe (10) qui entoure un espace enveloppé (11) dans lequel lesdits tubes (20) sont disposés de telle sorte qu'en particulier un écoulement (S"') d'un fluide guidé dans l'espace enveloppé (11) entre en échange de chaleur indirect avec un écoulement (S, S') d'un fluide guidé dans le tube (20) concerné,
chacun desdits tubes (20) étant enroulé autour d'un tube d'âme (12) de l'échangeur de chaleur (1) et chacun desdits tubes (20) associé à chaque entrée (30-36) définissant une surface de chauffe,
**caractérisé en ce que**
l'échangeur de chaleur (1) présente au moins un moyen de commutation (100) configuré pour faire basculer au moins l'une des entrées (30) entre au moins un premier état de fonctionnement et un deuxième état de fonctionnement, de telle sorte que dans le premier état de fonctionnement, l'écoulement (S) du premier fluide puisse être introduit par l'intermédiaire de la ou des entrées (30) dans le ou les tubes (20) associés et que dans le deuxième état de fonctionnement, l'écoulement (S') du deuxième fluide puisse être introduit par l'intermédiaire de la ou des entrées (30) dans le ou les tubes (20) associés, pour que dans le premier état de fonctionnement, davantage de surface de chauffe soit mise à disposition de l'écoulement (S) du premier fluide et que par conséquent moins de surface de chauffe soit mise à disposition de l'écoulement (S') du deuxième fluide et pour que dans le deuxième état de fonctionnement, davantage de surface de chauffe soit mise à disposition de l'écoulement (S') du deuxième fluide et que par conséquent moins de surface de chauffe soit mise à disposition de l'écoulement (S) du premier fluide.

2. Echangeur de chaleur selon la revendication 1, **caractérisé en ce que** le moyen de commutation (100) qui commute la ou les entrées (30) présente une première soupape (101) qui bloque un premier conduit tubulaire (81) relié à l'entrée (30) et une deuxième soupape (102) qui bloque un deuxième conduit tubulaire (82) relié à l'entrée (30), l'échangeur de chaleur (1) étant configuré pour amener l'écoulement (S) du premier fluide à chaque entrée (30) par le premier conduit tubulaire (81) et l'écoulement (S') du deuxième fluide à cette entrée (30) par l'intermédiaire du deuxième conduit tubulaire (82).

3. Echangeur de chaleur selon les revendications 1 ou 2, **caractérisé en ce qu'**une sortie (50) par laquelle l'écoulement (S) du premier fluide ou l'écoulement (S') du deuxième fluide peut être extrait du ou des tubes (20) associé à l'entrée (30) est associée à la ou aux entrées (30), un autre moyen de commutation (200) configuré pour faire basculer la sortie (50) entre au moins un premier état de fonctionnement et un deuxième état de fonctionnement de telle sorte que dans le premier état de fonctionnement, l'écoulement (S) du premier fluide puisse être amené à un premier conduit tubulaire de sortie (91) relié à la sortie (50) et que dans le deuxième état de fonctionnement, l'écoulement (S') du deuxième fluide puisse être amené à un deuxième conduit tubulaire de sortie (92) relié à la sortie (50), l'autre moyen de commutation (200) présentant une première soupape (201) prévue sur le premier conduit tubulaire de sortie (91) et bloquant le premier conduit tubulaire de sortie (91) et une deuxième soupape (202) prévue sur le deuxième conduit tubulaire de sortie (92) et bloquant le deuxième conduit tubulaire de sortie (92) .

4. Echangeur de chaleur selon l'une des revendications précédentes, **caractérisé en ce que** les entrées (30-36) de l'échangeur de chaleur (1) sont configurées comme tubulures de l'échangeur de chaleur (1), les entrées (30-36) étant disposées en particulier sur une extrémité supérieure ou sur une extrémité inférieure de l'échangeur de chaleur (1).

5. Echangeur de chaleur selon la revendication 3 ou la revendication 4 dans la mesure où elle est subordonnée à la revendication 3, **caractérisé en ce que** la sortie (50) de l'échangeur de chaleur (1) est configurée comme tubulure de l'échangeur de chaleur (1), la sortie (50) étant disposée en particulier sur une extrémité de l'échangeur de chaleur (1) située à l'opposé de l'entrée (30) associée.

6. Echangeur de chaleur selon les revendications 4 ou 5, **caractérisé en ce que** les tubulures (30-36, 50) débordent hors de l'enveloppe (10) ou sont formées à l'intérieur de cette dernière.

7. Echangeur de chaleur selon l'une des revendications précédentes, **caractérisé en ce que** plusieurs tubes (20) sont raccordés aux entrées (30-36) ou à la ou aux entrées (30), chaque tube (20) étant ancrée en particulier dans un fond tubulaire (40) associé à chaque entrée (30-36).

8. Echangeur de chaleur selon les revendications 3 et 7, **caractérisé en ce que** la sortie (50) associée à la ou aux entrées (30) est reliée à plusieurs tubes (20), chaque tube (20) étant ancré en particulier dans un fond tubulaire (60) associé à la sortie (50).

9. Echangeur de chaleur selon l'une des revendications précédentes, **caractérisé en ce que** dans le deuxième état de fonctionnement, un tube, plusieurs tubes ou tous les tubes de l'écoulement (S) du premier fluide sont associés à l'écoulement (S') du deuxième fluide de telle sorte que ce dernier dispose de davantage de surface de chauffe et que l'écoulement (S) du premier fluide dispose de moins de surface de chauffe.

10. Procédé d'adaptation de la surface de chauffe d'un échangeur de chaleur (1) en spirale à différentes situations de fonctionnement, en particulier par recours à un échangeur de chaleur (1) selon l'une des revendications précédentes, et dans lequel l'échangeur de chaleur (1) présente plusieurs entrées (30-36), chacune reliée à au moins un tube associé (20) de l'échangeur de chaleur (1), chacun des tubes (20) associé à chaque entrée (30-36) définissant une surface de chauffe, au moins l'une des entrées (30) étant commutée depuis un premier état de fonctionnement jusque dans un deuxième état de fonctionnement de telle sorte que dans le premier état de fonctionnement, l'écoulement (S) du premier fluide puisse être introduit par l'intermédiaire de la ou des entrées (30) dans le ou les tubes (20) associés et que dans le deuxième état de fonctionnement, l'écoulement (S') du deuxième fluide puisse être introduit par l'intermédiaire de la ou des entrées (30) dans le ou les tubes (20) associés, pour que dans le premier état de fonctionnement, davantage de surface de chauffe soit mise à disposition de l'écoulement (S) du premier fluide et que par conséquent moins de surface de chauffe soit mise à disposition de l'écoulement (S') du deuxième fluide et pour que dans le deuxième état de fonctionnement, davantage de surface de chauffe soit mise à disposition de l'écoulement (S') du deuxième fluide et que par conséquent moins de surface de chauffe soit mise à disposition de l'écoulement (S) du premier fluide.

11. Procédé selon la revendication 10, **caractérisé en ce que** dans le deuxième état de fonctionnement, un tube, plusieurs tubes ou tous les tubes de l'écoulement (S) du premier fluide sont associés à l'écoulement (S') du deuxième fluide de telle sorte que ce dernier dispose de davantage de surface de chauffe et que l'écoulement (S) du premier fluide dispose de moins de surface de chauffe.
